# DEMANDE DE BREVET EUROPEEN

(11) **EP 2 860 630 A1**
(43) Date de publication de la demande: **15.04.2015**
(21) Numéro de dépôt: 14168576.8
(22) Date de dépôt: 16.05.2014
(51) Int. Cl.: G06F 9/50, G06F 15/173

(54) **Procédé de transfert de données dans un environnement dynamique**

(30) Priorité: 19.06.2013 FR 1355766
(71) Demandeur: BULL SAS, 78340 Les Clayes sous Bois (FR)
(72) Inventeur: Quintin, Jean-Noël, 92340 Bourg La Reine (FR)
(74) Mandataire: Camus, Olivier Jean-Claude

(57) **Abrégé**

L'invention concerne un procédé de transfert d'au moins une donnée depuis une machine initiale (2) vers d'autres machines (5), le procédé comportant les étapes suivantes :
- Détermination d'un groupe de machines cibles (5, 6) potentiellement intéressées par la donnée,
- Segmentation de la donnée en plusieurs parties ;
- Envoi des parties de la donnée aux machines cibles (5, 6) de façon à ce que les parties de la donnée soient réparties entre les machines cibles du groupe.

## Description

### DOMAINE TECHNIQUE

La présente invention concerne un procédé de transfert de données entre des machines, notamment dans un environnement dynamique.

### ETAT DE LA TECHNIQUE ANTERIEUR

Une grappe de serveurs est un ensemble de machines, appelées noeuds, interconnectées par un réseau qui permettent généralement à un ou plusieurs utilisateurs d'exécuter plusieurs applications simultanément. Pour cela, chaque noeud de la grappe comporte des ressources physiques, comme par exemple un processeur, une mémoire..., et des ressources logicielles qu'il met à la disposition des utilisateurs pour que ceux-ci exécutent leurs applications. Chaque utilisateur qui souhaite exécuter une application sur la grappe peut soumettre une requête à la grappe c'est-à-dire une description de l'application à exécuter. La soumission contient une description des ressources qu'il souhaite obtenir (quantité de mémoire vive, nombre de processeurs, librairies...) afin d'exécuter l'application. La description renseigne entre autres sur le chemin vers l'application à exécuter, ainsi que les fichiers d'entrée requis pour l'exécuter et les fichiers produits. Cette requête peut être considérée comme une tâche que l'on définie par un ensemble d'instructions à exécuter, les données nécessaires à leurs exécutions et le ou les résultats produits. Pour la requête les instructions à exécuter sont représentées par l'application, les données par les fichiers en entré et le ou les résultats produits sont les fichiers de sorti. Une tâche peut aussi être une fonction d'une application prenant en paramètre un entier X et retournant X² par exemple.

Afin d'assurer une bonne utilisation de la grappe, il convient de coordonner les différentes tâches à exécuter par l'intermédiaire d'un ordonnanceur de tâches ou gestionnaire de ressources, qui permet de planifier l'exécution des différentes tâches de façon à utiliser au mieux les ressources de la grappe pour exécuter les tâches des utilisateurs aussi vite que possible. L'ordonnanceur peut choisir soit statiquement le processeur ou la machine qui exécutera une tâche, soit dynamiquement au cours de l'exécution en fonction des aléas du système et du temps d'exécution des tâches qui n'est pas toujours prédictible. L'ordonnanceur permet donc d'orchestrer l'exécution de toutes les tâches depuis le moment de leur soumission jusqu'au moment de leur terminaison. Il sélectionne en permanence parmi l'ensemble des tâches soumises, des tâches qu'il peut exécuter sur la grappe en s'assurant que pour celles-ci une place est disponible sur les noeuds de la grappe pour chacun de leurs processeurs. Pour cela, l'ordonnanceur de tâches se base sur la description des besoins en ressources de la tâche et cherche parmi les noeuds, une partition de ressources pouvant accueillir chaque processus de la tâche. Une fois la partition allouée à chacun des processus, le gestionnaire de ressources déploie l'application sur les différends noeuds et lance son exécution.

La gestion du stockage des données dans les grappes de serveurs est un enjeu crucial pour optimiser les performances de la grappe de serveurs. Lorsque les données temporaires des applications n'ont pas besoin d'être partagés, les données peuvent être stockées sur la mémoire locale des noeuds de calcul afin d'obtenir un temps d'accès minimal. Toutefois, dans le cas où les données doivent être partagées entre plusieurs machines, il est nécessaire de gérer le transfert de données entre les machines de façon à ce que chaque tâche puisse accéder rapidement aux données dont elle a besoin. En effet, certaines tâches produisent des données qui seront utilisées par d'autres tâches. Les autres tâches devront donc pouvoir accéder à ces données.

Dans un contexte d'ordonnancement dynamiques notamment, l'ordonnanceur peut migrer une tâche d'une machine à une autre à tout moment tant que l'exécution n'est pas commencée. il n'est donc pas possible de déterminer a priori à quelle machine envoyer des données nécessaires à l'exécution d'une tâche.

Par conséquent, dans l'art antérieur, lorsqu'une donnée est créée par une machine lors de l'exécution d'une tâche, cette machine prévient les autres machines de la création de la donnée. Puis lorsqu'une ou plusieurs des autres machines ont besoin de cette donnée à leur tour, elles la demandent à la machine initiale. La machine initiale leur envoie alors la donnée. Pour cela, la machine initiale indique où est mémorisée la donnée, la taille de donnée, ainsi que le destinataire de la donnée. Toutefois, un tel procédé de transfert de données est long de sorte qu'il augmente le temps d'exécution de l'ensemble des tâches.

### EXPOSE DE L'INVENTION

L'invention vise à remédier aux inconvénients de l'état de la technique en proposant un procédé de transfert d'au moins une donnée qui soit plus rapide que ceux de l'art antérieur de façon à ne pas diminuer la rapidité d'exécution des tâches, notamment dans une grappe de serveurs.

Pour résoudre ce problème l'invention propose de réaliser un pré transfert d'au moins une partie de la donnée avant que les machines cibles en aient besoin. Dès que la donnée est prête à être envoyée, on envoie donc ses parties à une ou plusieurs machines cibles qui en auront potentiellement besoin par la suite, et ce avant que ces machines cibles en expriment le besoin. Ainsi lorsqu'une de ces machines cibles en aura réellement besoin, elle aura déjà une partie de la donnée, qu'elle pourra commencer à exploiter tout en demandant qu'on lui envoie les autres parties de la donnée.

Plus précisément, est proposé selon un premier aspect de l'invention, un procédé de transfert d'au moins une donnée entre une machine initiale et des machines cibles, le procédé comportant les étapes suivantes :
- Détermination d'un groupe de machines cibles potentiellement intéressées par la donnée,
- Envoi d'au moins une partie de la donnée aux machines cibles.

Le procédé est particulièrement avantageux car au contraire des procédés de l'art antérieur dans lesquels la donnée n'était envoyée qu'à une machine cible déterminée une fois que cette machine cible en exprimait le besoin, le procédé selon l'invention propose d'envoyer des parties ou la totalité de la donnée à plusieurs machines cibles qui pourraient être potentiellement intéressées par cette donnée. Ainsi, lorsqu'une de ces machines cibles a besoin de cette donnée à l'avenir, elle en a déjà au moins une partie, qu'elle peut commencer à exploiter, en demandant en parallèle aux autres machines qui ont les autres parties de cette donnée de lui envoyer ces parties. Si une machine extérieure au groupe de machines cibles demande la donnée, elle pourra lui être transmise depuis la machine la plus proche et/ou depuis plusieurs machines afin de réduire le temps de communication. La machine pourra ainsi commencer l'exécution de la tâche plus rapidement, ce qui permet d'augmenter les performances d'exécution de la grappe de serveurs. L'utilisation d'une pré-distribution des données permet donc de réduire le temps de communication lorsque la donnée est vraiment nécessaire.

Le procédé selon le premier aspect de l'invention peut également présenter une ou plusieurs des caractéristiques ci-après prises indépendamment ou selon toutes les combinaisons techniquement possibles.

Le procédé peut également comporter les étapes suivantes :
- Segmentation de la donnée en plusieurs parties si la donnée est grande;
- Envoi des parties de la donnée aux machines cibles de façon à ce que les parties de la donnée soient réparties entre les machines cibles du groupe.

Le procédé peut également permettre de transférer plusieurs données, c'est-à-dire un groupe de données. Dans ce cas, ce sont des parties du groupe de données qui sont envoyées aux machines cibles.

Selon différents modes de réalisation, en fonction de l'espace de stockage disponible dans chacune des machines cibles, la même partie de la donnée peut être envoyée à plusieurs machines cibles différentes ou elle peut être envoyée à seulement une machine cible.

Par ailleurs, pour améliorer encore la vitesse d'exécution de la tâche, certaines données ou parties de données peuvent être indiquées comme prioritaires. Ces données ou parties de données prioritaires pourront être celles qui seront absolument nécessaires au début de l'exécution de la tâche. Ces données pourront alors être communiquées à toutes les machines cibles.

L'étape d'envoi des parties de la donnée peut comporter une étape d'indication de l'endroit où est mémorisée la donnée, la taille de chaque partie de la donnée, ainsi que un ou plusieurs destinataires pour chaque partie de la donnée.

Le procédé peut comporter une étape d'enregistrement dans une table de hachage distribuée de quelles parties ont été envoyées à quelles machines cibles. Pour que chaque donnée gérée par une machine se charge de stocker l'information liée à cette donnée, c'est-à-dire sur quelles machines elle est stockée et quelles parties de la donnée. Ainsi lorsqu'une machine souhaite accéder à la donnée, elle contacte la machine en charge de la donnée pour savoir comment y accéder. La machine distante lui répond en lui fournissant une table contenant les machines ayant la donnée et quelle partie de la donnée la machine a. La table de hachage distribuée est de préférence créée en même temps que la donnée et elle est remplie lors de l'envoi des parties de la donnée aux machines de façon à mémoriser quelles parties ont été envoyées à quelles machines. Ce procédé permet de répartir l'information entre les machines. Si beaucoup de machines souhaitent une information elles demanderont l'information à des machines différentes si cela ne concerne pas la même donnée. La table de hachage distribuée permet dans ce cadre de gérer sans problème d'efficacité un plus grand nombre de machines et de données.

Le procédé peut comporter une étape d'enregistrement d'au moins une partie de la donnée dans la machine initiale. En effet, selon différents modes de réalisation, en fonction de la mémoire disponible dans la machine initiale, et en fonction de la probabilité de réutilisation de la donnée par la machine initiale, la machine initiale peut garder en mémoire la totalité de la donnée, ou au moins une partie de cette donnée.

Le procédé peut en outre comporter une étape de réception d'une requête d'envoi par une des machines cibles de la au moins une partie de la donnée enregistrée dans la machine initiale.

Le procédé peut également comporter une étape d'envoi de la au moins une partie de la donnée enregistrée à la machine cible. En effet, lorsqu'une des machine cible, dite machine cible requérante, a besoin des autres parties de la donnée qu'elle n'a pas, elle demande ces parties, à la machine initiale et/ou aux autres machines cibles qui ont reçu des parties de la donnée. On optimise ainsi la communication de la donnée à la machine cible qui en a besoin puisqu'elle peut recevoir les parties de la donnée de plusieurs machines simultanément ce qui lui permet de recevoir plus rapidement la donnée.

Le procédé peut également comporter une étape d'enregistrement dans un compteur du nombre de fois où la au moins une partie de la donnée a été envoyée. En effet, lorsque la donnée ou une de ces parties est gardé en mémoire dans la machine initiale, on peut prévoir de compter le nombre de fois où cette donnée ou bien cette partie de donnée seront utilisées de façon à supprimer la donnée ou la partie de donnée une fois que ce nombre de fois est atteint.

Ainsi le procédé peut également comporter une étape de suppression de la au moins une partie de la donnée lorsque le nombre de fois où la au moins une partie de la donnée est égal à une valeur seuil. Le compteur permet de savoir combien de fois la donnée sera utilisée. Ainsi la donnée peut être supprimée après un certain nombre d'accès : dans ce cas, une interface de création et de suppression peut-être utilisée en parallèle.

Selon un mode de réalisation préférentiel, ce procédé est utilisé pour gérer les mouvements de données entre les machines d'une grappe de serveurs et notamment entre les processeurs d'une grappe de serveur.

Ce procédé peut aussi être utilisé pour gérer les mouvements de données au sein d'un processeur. Dans ce cas, la machine initiale est une partie du processeur, et les machines cibles sont d'autres parties du processeur.

Le procédé peut également être utilisé pour la localisation des données sur une plate-forme de type NUMA (hiérarchique avec plusieurs banc mémoire).

Un deuxième aspect de l'invention concerne également un procédé d'appel de la donnée par une machine cible requérante, la machine cible requérante ayant reçu une partie de la donnée de la machine initiale par un procédé de transfert selon le premier aspect de l'invention, le procédé comportant les étapes suivantes :
- Demande à chacune des machines cibles ayant une partie de la donnée et/ou à la machine initiale des parties de la donnée manquantes à la machine cible requérante ;
- Réception des parties de la donnée.

En effet, la machine cible requérante fait partie des machines cibles qui ont reçu une partie de la donnée de sorte que lorsque cette machine cible requérante a besoin de la donnée, elle peut déjà disposer de la partie de la donnée qu'elle a reçu et parallèlement demander l'envoi des autres parties de la donnée. Ces autres parties peuvent être envoyées par les autres machines cibles qui ont reçu la donnée et/ou par la machines initiale, ce qui permet de diminuer le temps de transmission de la donnée.

Pour cela, le procédé d'appel comporte de préférence une étape de consultation de la table de hachage distribuée, qui permet à la machine cible requérante de savoir où sont stockées les parties de la donnée.

Un troisième aspect de l'invention concerne un procédé de communication de donnée dans un ensemble de machines, le procédé de communication comportant un procédé de transfert selon le premier aspect de l'invention et un procédé d'appel selon le deuxième aspect de l'invention.

Un quatrième aspect de l'invention concerne une interface de communication comportant des moyens aptes à mettre en oeuvre le procédé de communication selon le troisième aspect de l'invention.

Un cinquième aspect de l'invention concerne une grappe de serveur comportant une interface de communication selon le quatrième aspect de l'invention.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'une grappe de serveurs mettant en oeuvre un procédé selon un mode de réalisation de l'invention ;
- La figure 2, une représentation schématique des étapes d'un procédé de transfert selon un mode de réalisation de l'invention ;
- La figure 3, une représentation schématique des étapes d'un procédé d'appel selon un mode de réalisation de l'invention.
- La figure 4 représente un graphe de taches simples avec dépendance et une comparaison des ordonnancements obtenus avec les méthodes de l'art antérieur (ordonnancements 1, 2, 3) et avec la méthode selon l'invention (ordonnancement 4).

Pour plus de clarté, les éléments identiques ou similaires sont repérés par des signes de références identiques sur l'ensemble des figures.

### DESCRIPTION DETAILLEE D'AU MOINS UN MODE DE REALISATION

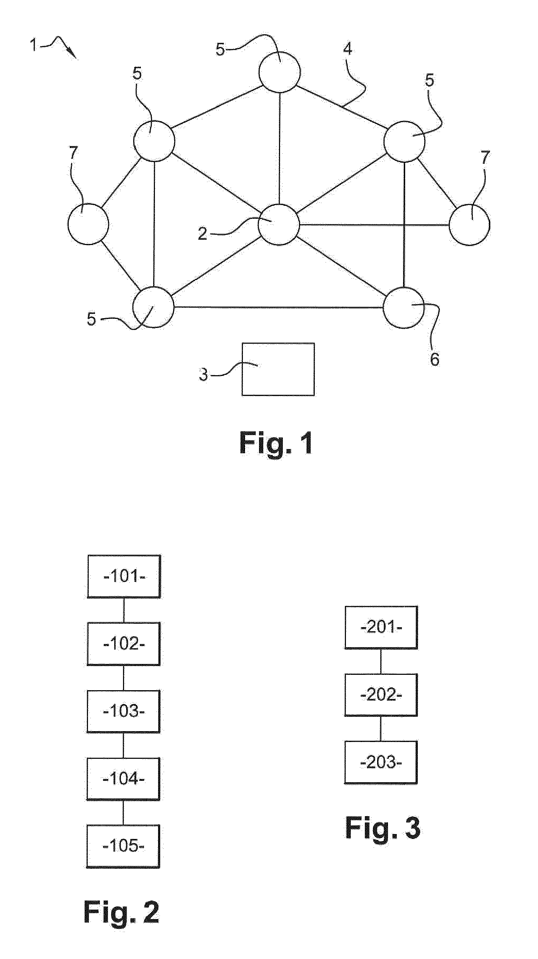

La figure 1 représente une grappe de serveur mettant en oeuvre un procédé de transfert des données selon un mode de réalisation de l'invention.

Cette grappe 1 de serveurs comporte un ensemble de machines 2, 5, 6, 7 appelées noeuds, interconnectées par un réseau 4. Chaque utilisateur qui souhaite exécuter une application sur la grappe peut soumettre une tâche à la grappe.

L'exécution des différentes tâches sur la grappe est coordonnée par un ordonnanceur de tâches 3, qui permet de planifier l'exécution des différentes tâches. L'ordonnanceur de tâche 3 permet d'orchestrer l'exécution des tâches depuis le moment de leur soumission jusqu'au moment de leur terminaison. Il sélectionne en permanence parmi l'ensemble des tâches soumises, des tâches qu'il peut exécuter sur la grappe en s'assurant que pour celles-ci une place est disponible sur les noeuds de la grappe pour chacun de leurs processeurs.

Une tâche peut comporter des dépendances. Dans ce cas, la tâche est exécutée qu'une fois que ces dépendances ont été exécutées. Tant que toutes les dépendances n'ont pas été exécutées, il n'est pas possible de désigner le lieu d'exécution de la tâche. Pour l'exécution de la tâche, des données produites lors de l'exécution des dépendances ou lors de l'exécution d'autres tâches seront nécessaires.

Le procédé de communication des données selon un aspect de l'invention permet d'optimiser la vitesse de transfert des données de façon à ce que la tâche puisse être traitée plus rapidement.

Pour cela, ce procédé de communication comporte un procédé de transfert des données qui va être décrit en référence à la figure 2 et un procédé d'appel des données qui va être décrit en référence à la figure 3.

En référence à la figure 2, lorsqu'une donnée est créé par une des machines, dite « machine initiale » 2, pour l'exécution d'une dépendance, cette donnée peut être modifiée par l'utilisateur. Puis lorsque la donnée est dans un état prêt à être envoyée, le procédé comporte une première étape 101 de réception ou de détermination d'une liste de machines cibles qui pourront potentiellement avoir besoin de la donnée pour exécuter une tâche. Les machines cibles sont de préférence des machines qui vont réaliser des tâches nécessitant la donnée.

Le procédé comporte également une étape 102 d'ajout d'information au sein de la table de hachage distribuée.

Le procédé comporte également une étape 103 de séparation de la donnée en parties, lorsque la donnée est volumineuse.

Le procédé comporte ensuite une étape 104 d'envoi des parties de la donnée aux machines cibles 5, 6 de façon à ce que les parties de la donnée soit réparties entre les machines cibles 5, 6. Si la donnée est de faible volume, elle peut être envoyée dans sa totalité à chaque machine cibles. Lors de cette étape d'envoi on peut envisager d'envoyer la même partie de la donnée à plusieurs machines cibles ou alors d'envoyer une seule fois chaque partie de la donnée.

Le procédé comporte parallèlement à cette étape d'envoi 104 une étape 105 de remplissage de la table de hachage distribuée de façon à garder en mémoire quelle machine cible a reçu quelle partie de la donnée de façon à pouvoir retrouver la totalité de la donnée.

Selon différents modes de réalisation, la machine initiale 2 peut également garder en mémoire la donnée ou au moins une de ces parties.

Ensuite, lorsque toutes les dépendances de la tâche ont été exécutées, et qu'une des machines cibles, dite « machine cible requérante » 6, a été déterminée pour réaliser la tâche, cette machine cible requérante 6 peut utiliser la partie de la donnée qu'elle a reçu et en parallèle elle peut utiliser un procédé d'appel selon un mode de réalisation de l'invention pour récupérer les autres parties de la donnée. Ainsi, la machine cible requérante a déjà une partie des données dont elle a besoin pour exécuter la tâche et cette partie n'a pas à être transférer. La machine cible requérante pourra donc commencer plus rapidement l'exécution de la tâche.

Grace à la table de hachage distribuée, la machine cible requérante 6 peut savoir où sont les autres parties de la donnée.

Pour permettre à la machine cible requérante 6 de récupérer les autres parties de la donnée, le procédé d'appel comporte donc une étape 201 de consultation de la table de hachage distribuée.

Le procédé d'appel comporte ensuite une étape 202 de demande à chacune des machines cibles 5 ayant une partie de la donnée et/ou à la machine initiale 2 des parties de la donnée manquantes.

Le procédé d'appel comporte ensuite une étape 203 de réception des parties de la donnée. Lorsque plusieurs machines 5, 2 ont la même partie de la donnée en mémoire, par exemple lorsque cette partie a été envoyée en double à plusieurs machines cibles, la machine cible requérante peut recevoir cette partie de plusieurs machines cibles simultanément, ce qui permet à la machine cible requérante d'avoir plus rapidement la totalité de ladite partie.

Le procédé a été décrit dans le cas d'une donnée, mais la même description pourrait être effectuée dans le cas où un groupe de donnée est transféré à la place d'une seule donnée. Dans ce cas, ce sont des parties du groupe de données qui sont transférées entre les machines et non plus uniquement des parties d'une seule donnée.

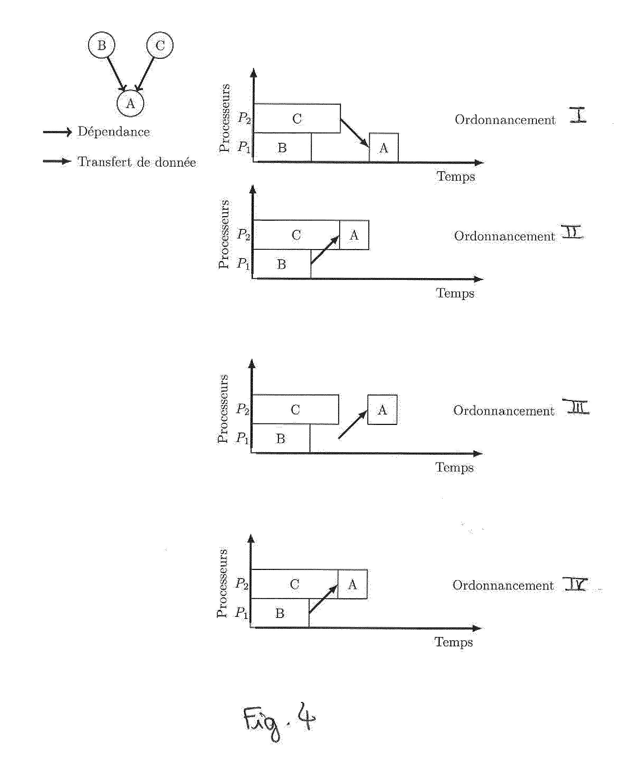

La figure 4 illustre l'avantage d'une méthode selon un mode de réalisation de l'invention par rapport aux méthodes de l'art antérieur, dans le cas où trois tâches A, B, C doivent être exécutées sur une grappe de serveurs. La tâche A nécessite les données de la tâche B et de la tâche C.

Les ordonnancements I et II sont des ordonnancements statiques de l'art antérieur. Dans le cas où le temps d'exécution des taches n'est pas connu, un ordonnanceur statique va mettre les tâches B et C sur deux processeurs/machines différentes. La tâche A est ordonnancée sur l'un des deux processeurs/machines. Sans connaître le temps d'exécution des tâches B et C, le choix est réalisé aléatoirement. L'ordonnancement obtenu est soit l'ordonnancement I, soit l'ordonnancement II.

L'ordonnancement III est un ordonnancement dynamique de l'art antérieur. Selon cet ordonnancement III, si le temps d'exécution de B est plus grand que celui de C, la tâche A sera exécutée sur le même processeur que B. Cela est permis grâce à la dynamique de l'ordonnanceur. Si le temps de transfert entre B et A est faible, l'ordonnancement sera quasiment optimal sur cet exemple.

Avec l'aide du procédé de communication selon l'invention, l'ordonnancement obtenu est l'ordonnancement IV. Ainsi que le temps de transfert soit petit ou non, l'ordonnancement obtenu est optimal sur cet exemple.

Par ailleurs, pour améliorer encore la vitesse d'exécution de la tâche, certaines données ou parties de données peuvent être indiquées comme prioritaires. Ces données ou parties de données prioritaires pourront être celles qui seront absolument nécessaires au début de l'exécution de la tâche. Ces données pourront alors être communiquées à toutes les machines cibles lors de l'étape 104. Les autres données pourront ensuite être fournies lors de l'exécution de la tâche.

Naturellement l'invention n'est pas limitée aux modes de réalisation décrits en référence aux figures et des variantes pourraient être envisagées sans sortir du cadre de l'invention. En effet, le procédé de communication de données selon l'invention pourrait être utilisé pour gérer les mouvements de données au sein d'un processeur au lieu d'être utiliser pour gérer les mouvements de données entre processeurs. Le procédé selon l'invention pourrait également être utilisé pour localiser des données sur une plate-forme numérique de type NUMA, c'est-à-dire sur une plate-forme hiérarchique avec plusieurs bancs mémoires. Par ailleurs, certaines étapes des procédés pourraient être inversées. On pourrait notamment séparer la donnée ou la groupe de données en parties avant d'avoir reçu le groupe de machines cibles.

## Revendications

1. Procédé d'exécution d'une tâche dans une grappe de serveurs comportant un ensemble de machines (2, 5, 6, 7) interconnectées par un réseau, le procédé comportant les étapes suivantes :
- Création d'une donnée par une machine initiale ;
- Détermination d'un groupe de machines cibles (5, 6) potentiellement intéressées par la donnée,
- Segmentation de la donnée en plusieurs parties;
- Envoi des parties de la donnée aux machines cibles de façon à ce que les parties de la donnée soient réparties entre les machines cibles du groupe.

2. Procédé de transfert selon la revendication précédente, comportant en outre une étape d'enregistrement dans une table de hachage distribuée de quelles parties ont été envoyées à quelles machines cibles (5, 6).

3. Procédé de transfert selon l'une des revendications précédentes, comportant en outre une étape d'enregistrement d'au moins une partie de la donnée dans la machine initiale (2).

4. Procédé de transfert selon la revendication précédente, comportant en outre les étapes suivantes :
- Réception d'une requête d'envoi par une des machines cibles de la au moins une partie de la donnée enregistrée dans la machine initiale ;
- Envoi de la au moins une partie de la donnée enregistrée à la machine cible.

5. Procédé de transfert selon la revendication précédente, comportant en outre une étape d'enregistrement dans un compteur du nombre de fois où la au moins une partie de la donnée a été envoyée.

6. Procédé de transfert selon la revendication précédente, comportant en outre une étape de suppression de la au moins une partie de la donnée lorsque le nombre de fois où la au moins une partie de la donnée est égal à une valeur seuil.

7. Procédé d'appel de la donnée par une machine cible requérante (6), la machine cible requérante (6) ayant reçu au moins une partie de la donnée de la machine initiale (2) par un procédé de transfert selon l'une des revendications précédentes, le procédé comportant les étapes suivantes :
- Demande à chacune des machines cibles (5) ayant une partie de la donnée et/ou à la machine initiale (2) des parties de la donnée manquantes à la machine cible requérante (6);
- Réception des parties de la donnée.

8. Procédé d'appel selon la revendication précédente lorsqu'elle dépend de la revendication 2 comportant en outre une étape de consultation de la table de hachage distribuée.

9. Procédé de communication d'au moins une donnée dans un ensemble de machines comportant :
- un procédé de transfert selon l'une des revendications 1 à 7 et
- un procédé d'appel selon l'une des revendications 8 ou 9.

10. Interface de communication comportant des moyens aptes à mettre en oeuvre le procédé de communication selon la revendication précédente.

11. Grappe de serveurs (1) comportant une interface de communication selon la revendication précédente.
